# EUROPÄISCHE PATENTSCHRIFT

(11) **EP 4 127 485 B1**
(45) Veröffentlichungstag und Bekanntmachung des Hinweises auf die Patenterteilung: **07.05.2025**
(21) Anmeldenummer: 21712080.7
(22) Anmeldetag: 10.03.2021
(51) Int. Cl.: F04D 29/057, F04D 29/58, F16C 17/14

(54) **VERFAHREN ZUM STARTEN EINES TURBOKOMPRESSORS MIT EINER LAGERANORDNUNG FÜR EINE ACHSWELLE DES TURBOKOMPRESSORS**
METHOD FOR STARTING A TURBOCOMPRESSOR WITH A BEARING ARRANGEMENT FOR AN AXLE SHAFT OF THE TURBOCOMPRESSOR
PROCÉDÉ DE DÉMARRAGE D'UN TURBOCOMPRESSEUR AVEC UN PALIER POUR UN ARBRE D'ESSIEU DU TURBOCOMPRESSEUR

(30) Priorität: 27.03.2020 DE 102020204017
(43) Veröffentlichungstag der Anmeldung: 08.02.2023
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE)
(86) Internationale Anmeldenummer: PCT/EP2021/056053
(87) Internationale Veröffentlichungsnummer: WO 2021/190934

(56) Entgegenhaltungen:
- EP-A1- 2 600 015
- EP-A2- 1 321 680
- DE-A1- 102012 221 445
- FR-A- 1 280 891

## Beschreibung

Die Erfindung betrifft ein Verfahren zum Starten eines Turbokompressors mit einer Lageranordnung für eine Achswelle des Turbokompressors.

### Stand der Technik

Wasserstoffbasierte Brennstoffzellen gelten als Basis für ein Mobilitätskonzept der Zukunft, da sie nur Wasser emittieren und schnelle Betankungszeiten ermöglichen. Beispielsweise PEM-Brennstoffzellen (PEM engl.:"proton-exchange-membrane"; Protonen-Austausch-Membran) können mit der Kathode der Brennstoffzelle zugeführter Luft mit Sauerstoff als Oxidationsmittel und der Anode der Brennstoffzelle zugeführtem Wasserstoff als Brennstoff in einem elektrokatalytischen Elektrodenprozess betrieben werden, um elektrische Energie mit einem hohen Wirkungsgrad bereitzustellen.

Solche Brennstoffzellen werden typischerweise gestapelt als Brennstoffzellen-Stack in einem Brennstoffzellen-System betrieben. Die der Kathode des Brennstoffzellen-Stacks zugeführte Luft wird mittels eines Turbokompressors verdichtet.

EP 1 321 680 A2, DE 10 2012 221445 A1, FR 1 280 891 A und EP 2 600 015 A1 offenbaren jeweils einen Turbokompressor mit einer Lagerung für eine Achswelle nach dem Stand der Technik.

### Offenbarung

Die Lagerung der Antriebswelle eines solchen Turbokompressors wird entweder mit Wälzlagern, mit dem Nachteil einer hohen Reibung und einer entsprechend geringen Lebensdauer oder mit hydrodynamischen Luftlagern, die, wegen der benötigten hohen Genauigkeit, aufwendig zu fertigen sind, umgesetzt. Beide Varianten haben ebenfalls den Nachteil, dass in den Lagern und/oder in der elektrischen Maschine entstehende Wärme nur schlecht abgeführt werden kann.

Entsprechend einem erfindungsgemäßen Aspekt wird ein Verfahren zum Starten eines Turbokompressors mit einer Lageranordnung entsprechend den Merkmalen des unabhängigen Anspruchs 1 vorgeschlagen, das zumindest zum Teil die beschriebenen Aufgaben löst. Vorteilhafte Ausgestaltungen sind Gegenstand der abhängigen Ansprüche sowie der nachfolgenden Beschreibung.

Bevor ein wasserhydraulisches Lager in Betrieb genommen werden kann, muss sichergestellt werden, dass eine ausreichende Betriebs-Temperatur erreicht ist.

Gemäß einem Aspekt wird eine Lageranordnung für eine Achswelle eines Turbokompressors, mit zumindest einem wasserhydraulischen Lager vorgeschlagen, das eingerichtet ist, die Achswelle des Turbokompressors drehbar zu lagern. Dabei umschließt das wasserhydraulische Lager die Achswelle an einem Umfang der Achswelle, so dass ein Lagerspalt gebildet wird. Das wasserhydraulische Lager ist eingerichtet, Wasser durch den Lagerspalt fließen zu lassen, um die Achswelle wasserhydraulisch zu lagern und weist ein Kaltstartelement auf, das eingerichtet ist, Wärme von einer Statorwicklung eines elektrischen Antriebsaggregats des Turbokompressors zu dem Lager der Lageranordnung zu leiten.

Ein solcher Turbokompressor weist typischerweise zwei Turbomaschinen auf, die mit einer gemeinsamen Achswelle mechanisch fest verbunden sind und zwei solcher Lageranordnungen aufweisen können.

Durch die höhere Viskosität von Wasser gegenüber Luft können die Lagergenauigkeiten eines solchen wasserhydraulischen Lagers in einer solchen Lageranordnung deutlich reduziert werden und die Tragfähigkeit des Lagers steigt bei ähnlichen Abmessungen deutlich an.

Die in den Lagern entstehende Wärme kann durch diesen Aufbau bedingt mit dem Wasser abgeführt werden und das Wasser kann auch verwendet werden, um die Wärme der elektrischen Maschine abzuführen. Besonders vorteilhaft ist, dass ein Turbokompressor, der in einem System eines Brennstoffzellen-Stacks angeordnet ist, das für das wasserhydraulische Lager notwendige Wasser, beispielsweise durch Kondensation der aus dem Brennstoffzellen-Stack austretenden Luftströmung, leicht bereitstellen kann.

Durch die äußere Beaufschlagung der beiden Ränder des Lagerspaltes mit Gas des Turbokompressors kann die Lageranordnung abgedichtet werden, um den Austritt von Wasser an den Rändern des Lagerspalts zu verhindern. Was zu einer besonders guten Abdichtung der Lageranordnung führt, wobei diese Abdichtung insbesondere wichtig ist, damit das Wasser des wasserhydraulischen Lagers nicht in die Turbine gelangt, um Tropfenschlag an den Turbinenschaufeln zu vermeiden. Somit kann mit einer solchen Lageranordnung eine zuverlässige Abdichtung und gegebenenfalls auch Kühlung der hydrodynamischen Lager erreicht werden, indem der Rand des Lagerspalts mit komprimierter Luft des Turbokompressors beaufschlagt wird, um das flüssige Medium wie beispielsweise Wasser daran zu hindern am Rand des Lagerspalts auszutreten. Wenn dieses Wasser in einen Kühlkreislauf des Turbokompressors geführt wird kann damit auch die Wicklung des Stators des elektrischen Antriebs des Turbokompressors gekühlt werden.

Dieses Gas steht dabei vorteilhafterweise in einem solchen System mit einem Turbokompressor inhärent zur Verfügung und kann sowohl von der Kompressor- bzw. Verdichterseite als auch von der Turbinenseite des Turbokompressors bereitgestellt werden. Das wasserhydraulische Lager stellt ein Gleitlager dar, und kann dabei als hydrostatisches oder hydrodynamisches Lager ausgebildet sein.

Der höhere Druck des Gases (Luft) beispielsweise vom Kompressor des Turbokompressors, der auf die beiden äußeren Ränder des Lagerspalts wirkt, wird dazu verwendet das Entweichen des Lagermediums, wie beispielsweise des Wassers, zu verhindern.

Das bedeutet also, dass das niedrigviskose Medium, wie beispielsweise Wasser, hohe Drehzahlen des Turbokompressors ermöglicht, ohne sich unzulässig zu erwärmen. Die Gefahr von Rostbildung beim Medium Wasser kann durch die Beschichtung der Achswelle im Bereich des Lagerspalts verhindert werden.

Durch dieses Wasser in dem Lagerspalt kann das Lager mit der Lageranordnung mit dem wasserhydraulischen Lager drehbar gelagert werden. Mit der Anzahl und der Anordnung von Zufuhröffnungen für das Wasser für den Lagerspalt kann eine gleichmäßige Verteilung von Wasser in dem Lagerspalt zur Optimierung der Gleiteigenschaften und der Tragfähigkeit des Lagers erreicht werden.

Durch die Anordnung und die Anzahl von Abflussöffnungen für das Wasser in dem Lagerspalt kann der Fluss des Wassers durch den Lagerspalt optimiert werden um die Gleiteigenschaften und die Tragfähigkeit des Lagers den Anforderungen entsprechend anzupassen.

Mit dem Kaltstartelement kann dabei vorteilhafterweise Wärme von der Statorwicklung des elektrischen Antriebsaggregats des Turbokompressors an das Lager der Lageranordnung geleitet werden, sofern die Lageranordnung noch nicht eine ausreichende Betriebstemperatur erreicht hat. Das kann beispielsweise dann der Fall sein, wenn das mit Wasser betriebene wasserhydraulische Lager eingefroren ist. Dabei kann das elektrische Antriebsaggregat mit elektrischen Signalen angesteuert werden, um innerhalb der Wicklungen des Stators des Antriebsaggregates Strom zu führen und in Wärme umzuwandeln, ohne dass die Achswelle in Rotation versetzt wird.

Zusätzlich wird im Normalbetrieb durch dieses Kaltstartelement Wärme von der Wicklung des Stators an das wassergekühlte Lager geführt, um den Stator zu kühlen.

Dabei kann der Stator für die Generierung der Wärme mit Gleichstrom oder mit einem Wechselstrom beaufschlagt werden, der eine Phasenverschiebung aufweist, die die Achswelle des Turbokompressors nicht in Rotation versetzt.

Dabei kann der Wärmestrom dQ/dt bei Kaltstart bedarfsgerecht durch Variation des Stroms eingestellt werden dQ/dt = PVerlust = R*I².

Gemäß einem Aspekt wird vorgeschlagen, dass ein erster Teil des Kaltstartelements benachbart zu der Statorwicklung angeordnet ist, um Wärme von der Statorwicklung aufzunehmen und ein zweiter Teil des Kaltstartelements benachbart zu zumindest einem Teil der Lageranordnung angeordnet ist, um die aufgenommene Wärme an das Lager der Lageranordnung abzugeben.

Dadurch, dass ein erster Teil des Kaltstartelements in der Nähe der Statorwicklung angeordnet ist kann Wärme der Statorwicklung effektiv auf das Kaltstartelement übertragen werden, um die Lageranordnung zum Kaltstart des Turbokompressors durch das Weiterleiten der Wärme aufzuwärmen.

Gemäß einem Aspekt wird vorgeschlagen, dass das Kaltstartelement an einer Körperkante eines Lagerschildes des Turbokompressors angeordnet ist, und die Körperkante des Lagerschildes der Statorwicklung zugewandt ist.

Auf diese Weise kann der Turbokompressors mit geringen Modifikationen das Kaltstartelement aufnehmen, um eine bessere Kaltstarteigenschaft des Turbokompressors durch die verbesserte Wärmeleitung an die Lageranordnung zu gewährleisten. Dabei kann das Kaltstartelement so geformt sein, dass es sich an eine vorhandene Körperkante des Lagerschildes anschmiegt, um eine geringe Modifikation des Aufbaus des Turbokompressors zu benötigen.

Gemäß einem Aspekt wird vorgeschlagen, dass das Kaltstartelement ein Material aufweist, das eine bessere Wärmeleitung aufweist als Stahl.

Alle Materialien mit einer besseren thermischen Leitfähigkeit als Stahl wie beispielsweise Kupfer oder Aluminium können dazu verwendet werden. Durch die verbesserte Wärmeleitung, die das Kaltstartelement bereitstellt, kann mehr Wärme von der Statorwicklung an die Lageranordnung geleitet werden.

Gemäß einem Aspekt wird vorgeschlagen, dass das Kaltstartelement Kupfer oder Aluminium oder eine Legierung aus Kupfer und Aluminium aufweist. Wie oben schon ausgeführt wurde, sind dies Beispiele für Materialien, die eine bessere thermische Leitfähigkeit aufweisen als Stahl.

Gemäß einem Aspekt wird vorgeschlagen, dass das Kaltstartelement als Stanz-Biegeteil aus einem Blech geformt wurde.

Wenn das Kaltstartelement aus Blech geformt wird kann es besonders einfach und preisgünstig gefertigt werden. Beispielsweise kann die Kaltstarteinrichtung kostengünstig durch Stanzen und Biegen eines Cu-Blechstreifens erfolgen. Die Geometrie wird aus einem Streifen ausgestanzt und anschließend der zentrale Teil zu einem offenen Ring gebogen werden.

Von diesem Ring zeigen gerade Stege nach außen in Richtung Statorwicklung und gerade Stege in Richtung der Achse der Lageranordnung. Die Breite und der Abstand dieser Stege kann an die Erfordernisse angepasst werden. Die geraden Stege des ersten bzw. des zweiten Teils des Kaltstartelements werden durch einen mittleren Teil zusammengehalten. Das Kaltstartelement kann bei der Fertigung des Turbokompressors in eine Aufnahme am Gehäuse der Maschinen und/oder eines Lagerschildes eingesetzt werden.

Gemäß einem Aspekt wird vorgeschlagen, dass das Kaltstartelement den der Statorwicklung zugewandten Teil des Lagerschildes bildet.

Durch diese Anordnung kann die Wärme besonders gut von der Statorwicklung, die benachbart angeordnet ist, aufgenommen werden. Alternativ kann ein Teil des Lagerschildes, das auf der Seite der Statorwicklung angeordnet ist, aus einem besser wärmeleitenden Material gefertigt werden oder es kann ein ringförmiges Material aufgebracht an ein modifiziertes Lagerschild aufgebracht werden.

Gemäß einem Aspekt wird vorgeschlagen, dass die Lageranordnung einen Sensor aufweist, der zur Bestimmung der Lagertemperatur thermisch an das wasserhydraulische Lager gekoppelt ist.

Mit einem solchen Sensor kann überprüft werden, ob die Betriebstemperatur für die Lageranordnung für ein Starten des Turbokompressors erreicht wurde.

Gemäß einem Aspekt wird vorgeschlagen, dass das Lager als hydrodynamisches Lager ausgebildet ist.

Das hydrodynamische Gleitlager ist ein Gleitlager, in dem sich der Schmiermittel-Druck bei Betrieb des Lagers an derjenigen Stelle, wo die Kraftübertragung zwischen den beiden Lagerteilen erfolgt, selbsttätig bildet. Der Schmierspalt ist an dieser Stelle keilförmig (Schmierkeil), so dass im von der Oberfläche des bewegten Lagerteils in die Verengung hinein mitgenommenen Schmierstoff höherer Druck entsteht, bzw. die Kraftübertragung über einen zwischengefügten Schmiermittel-Film erfolgt. Dazu kann die Achswelle so angeordnet sein, dass sie in Bezug auf das Lager eine exzentrische Position einnehmen kann. Vorteilhafterweise benötigt ein hydrodynamisches Lager keinen von außen aufgebrachten Wasserdruck, da es das Wasser selbstständig aus dem Tank ansaugen kann.

Beim hydrostatischen Gleitlager wird Schmierstoff mit einer externen Pumpe an der kraftübertragenden Stelle und unter erforderlichem Druck zugeführt. Da die Pumpe permanent arbeiten kann, herrscht hier Schmierstoffreibung auch am Beginn und am Ende des Lagerbetriebs (während des Anfahrens und Auslaufens). Der bei hoch belasteten Lagern erforderliche und in hydrodynamischen Gleitlagern entstehende Druck wäre allerdings mit einer Pumpe nicht leicht herstellbar. Hoch belastete hydrodynamische Gleitlager' werden gelegentlich für das Anfahren und Auslaufen zusätzlich mit einer Pumpe ausgerüstet.

Wenn das wasserhydraulische Lager als hydrostatisches Lager ausgeführt wird, baut eine solche Pumpe den notwendigen Druck in dem Lagerspalt auf. Für ein hydrodynamisches Lager kann eine solche Pumpe beispielsweise zum verschleißarmen Anfahren des Turbokompressors verwendet werden, weil mit der Pumpe ein Anfangsdruck bereitgestellt werden kann.

Erfindungsgemäß wird ein Verfahren zum Starten eines Turbokompressors mit einer Lageranordnung gemäß Anspruch 1 mit den Schritten vorgeschlagen.

In einem ersten Schritt wird eine Statorwicklung eines elektrischen Antriebsaggregats des Turbokompressors elektrisch angesteuert, um die Statorwicklung zu erwärmen, ohne dass eine Achswelle des Turbokompressors in Rotation versetzt wird. In einem weiteren Schritt wird die Statorwicklung des elektrischen Antriebsaggregats angesteuert, um die Achswelle des Turbokompressors in Rotation zu versetzen, sofern eine ausreichende Erwärmung des Lagers gewährleistet ist.

Dabei kann die Statorwicklung des Turbokompressors dreiphasig ausgelegt sein, und die Erwärmung des Motors mit gepulstem Strom erfolgen, der eine Phasenlage hat, die die Achswelle des Turbokompressors in Rotation versetzt und nur die elektrische Energie des gepulsten Stroms oder auch eines Gleichstroms in Wärme umsetzt, um den Status zu erwärmen. Durch das Kaltstartelement kann diese Wärme dann an die Lageranordnung weitergeleitet werden.

Mit diesem Verfahren kann also auf eine einfache Art und Weise die Lageranordnung mit einem wasserhydraulischen Lager erwärmt werden, um eine notwendige Betriebstemperatur zu erreichen.

Die Steuerung des Wärmestroms: dQ/dt bei Kaltstart, kann bedarfsgerecht durch Variation des Stroms eingestellt werden: dQ/dt = PVerlust = R*I².

Gemäß einem Aspekt wird bei dem Verfahren zum Starten eines Turbokompressors die Statorwicklung vorwiegend zur Erwärmung für eine vordefinierte Zeit elektrisch angesteuert, um eine ausreichende Erwärmung des Lagers zu gewährleisten.

Dabei ist unter der vorliegenden Erwärmung zu verstehen, dass durch die Ansteuerung der Statorwicklung zusätzlich sekundäre Effekte hervorgerufen werden können.

Eine solche vordefinierte Zeit kann abhängig von einer äußeren Temperatur bestimmt werden, oder generell so lang sein, dass unter normalen Betriebsbedingungen die Betriebstemperatur für die Lageranordnung erreicht wird. Dadurch wird vorteilhafter Weise erreicht, dass kein zusätzlicher Sensor in die Nähe der Lageranordnung zur Bestimmung der Temperatur der Lageranordnung benötigt wird.

Gemäß einem Aspekt wird bei dem Verfahren zum Starten eines Turbokompressors die Statorwicklung vorwiegend zur Erwärmung elektrisch angesteuert, und es wird mittels einer Temperatursensormessung gewährleistet, dass das Lager ausreichend erwärmt ist.

Dabei kann vorteilhafter Weise die mit dem Sensor gemessene Temperatur mit einem Sollwert verglichen werden und die notwendige Zeit für das Erreichen der Betriebstemperatur der Lageranordnung minimiert werden.

Es wird eine Verwendung einer Lageranordnung wie sie oben beschrieben ist, für einen Kaltstart eines Turbokompressors vorgeschlagen.

Es wird eine Verwendung einer der oben beschriebenen Lageranordnungen zur Lagerung einer Achswelle eines Turbokompressors vorgeschlagen, wobei der Turbokompressor eine Komponente eines Brennstoffzellensystems ist.

Da in einem solchen Brennstoffzellensystem, wie es oben beschrieben ist, das Wasser im laufenden Betrieb generiert wird, kann ein so gelagerter Turbokompressor hier besonders vorteilhaft eingesetzt werden.

Es wird ein Turbokompressor mit einer Lageranordnung, wie sie oben beschrieben ist, vorgeschlagen, wobei der Turbokompressor einen Flüssigkeits-Kühlkreislauf aufweist, und das dem Lagerspalt zufließende und/oder abfließende Wasser durch den Flüssigkeit-Kühlkreislauf geleitet wird, um Wärme der elektrischen Maschine des Turbokompressors abzuführen.

Das für die hydraulische Lagerung notwendige Wasser kann auf dem Weg zur Lagerstelle durch die thermisch hochbelasteten Bauteile der E-Maschine geführt werden und diese kühlen. Zwischen den Lagerstellen sitzt der Antriebsmotor, dessen Bauteile gekühlt werden müssen. Das für die hydraulische Lagerung notwendige Wasser kann auf dem Weg zur Lagerstelle durch die thermisch hochbelasteten Bauteile der E-Maschine geführt werden und diese kühlen.

Es wird ein Kathodenkreislauf eines Brennstoffzellen-Stacks mit einem oben beschriebenen Turbokompressor und einem Befeuchter zum Befeuchten des Kathodengases vorgeschlagen, wobei der Kathodenkreislauf eingerichtet ist, das aus der Lageranordnung abfließende Wasser dem Befeuchter zuzuführen.

Der Luft-Massenstrom, den der Verdichter des Turbokompressors fördert, muss befeuchtet und gekühlt werden. Das aus dem wasserhydraulischen Lager austretende Wasser kann diese Aufgabe mit übernehmen.

Gemäß einem Aspekt wird vorgeschlagen, dass eine mobile Plattform einen Turbokompressor mit einer Lageranordnung, wie sie oben beschrieben wurde, aufweist.

Eine mobile Plattform kann ein zumindest teilweise automatisiertes System sein, das mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme.

Jedes dieser Systeme kann ein vollständig oder teilweise autonomes System sein.

Im Folgenden werden Ausführungsbeispiele der Erfindung anhand der Figuren 1 bis 3 näher erläutert. Hierbei zeigt die
- Figur 1: eine Lageranordnung für eine Achswelle eines Turbokompressors;
- Figur 2: ein ungeformtes Stanz-Biegeteil für ein Kaltstartelement; und
- Figur 3: ein geformtes Stanz-Biegeteil für ein Kaltstartelement.

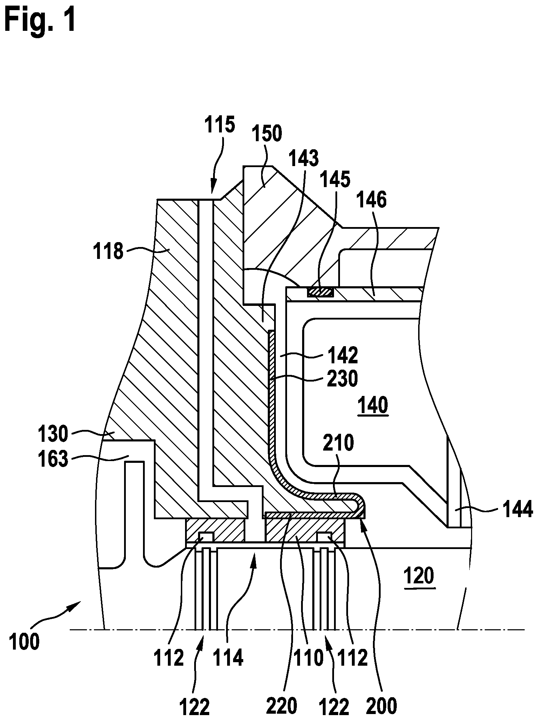

Die Figur 1 skizziert eine Lageranordnung 100 für eine Achswelle 120 eines Turbokompressors. Die gemeinsame Achswelle 120 des Turbokompressors wird mit zwei solchen Lageranordnungen 100 mit wasserhydraulischen Lagern 110 gelagert. Zwischen den wasserhydraulischen Lagern 110 ist ein elektrischer Antriebsmotor des Turbokompressors angeordnet, dessen Komponenten im Betrieb Wärme generieren, die abgeführt werden muss.

Dabei ist in der Figur 1 der Turbokompressor nur mit seiner Kupferwicklung 140 in einer Vergussmasse, einem Eisenblech 144 des Motors, einer Statoraufnahme 146, d. h. einer Kühlhülse, einem Motorgehäuse 150 mit Kühlöffnungen und einem Lagerschild 130 angedeutet.

Das wasserhydraulische Lager 110 der Lageranordnung 100 ist eingerichtet die Achswelle 120 des Turbokompressors drehbar zu lagern, wobei das wasserhydraulische Lager 110 die Achswelle 120 an einem Umfang der Achswelle 120 umschließt, um dazwischen einen Lagerspalt 114 zu bilden.

Dabei ist das wasserhydraulische Lager 110 eingerichtet, Wasser 116, das durch einen Kanal 115 dem Lager 110 zugeführt wird, durch den Lagerspalt 114 fließen zu lassen, um die Achswelle 120 wasserhydraulisch zu lagern.

Der Kanal 115 kann dazu mit einem Wassertank über eine fluiddurchlässige Verbindungsleitung verbunden sein. Bei einem hydrostatischen Lager der Lageranordnung 100 kann in der Verbindungsleitung zum Tank eine Pumpe vorgesehen sein, die das Wasser in den Lagerspalt 114 pumpt. Auch bei einem hydrodynamischen Lager 100 kann eine solche Pumpe in der Verbindungsleitung zum Tank vorgesehen sein, um zum Anlaufen des Turbokompressors einen Wasserdruck im Lagerspalt 114 aufzubauen.

Weiterhin weist die Lageranordnung 100 zumindest eine Gaszuführung 142, 163 auf, die Gas mit erhöhtem Druck vom Turbokompressor an beide äußeren Ränder des Lagerspalts 114 zum Abdichten des wasserhydraulischen Lagers 110 führt. Das Gas des Turbokompressors kann auch zur Luftkühlung des Elektroantriebs des Turbokompressors verwendet werden.

Das wasserhydraulische Lager 110 ist mit zwei Abflussöffnungen 112 im Bereich des Lagerspalts 114 eingerichtet, das Wasser 116 aus dem Lagerspalt 114 abfließen zu lassen und das Wasser 116 kann über einen hier nicht gezeigten Abflusskanal, der in der Lagerschale 130 gebildet sein kann, aus dem Turbokompressor abgeführt werden.

Dieses Wasser, das durch den Lagerspalt 114 geleitet wird, kann entweder einer Kathoden-Luftströmung eines Brennstoffzellensystems und/oder einem Flüssigkeits-Kühlkreislauf des Turbokompressors zugeführt werden.

Dazu kann dieses Wasser einem Befeuchter eines Systems zum Betrieb eines Brennstoffzellen-Stack zugeführt werden, der in der Zuführung von Luft für die Kathodenseite des Brennstoffzellen-Stacks angeordnet ist.

Das für die wasserhydraulischen Lager verwendete Wasser, das einem Wassertank entnommen wird, kann kondensiertes Wasser aus einem Luftmassenstrom eines Austrittsanschlusses einer Kathodenseite des Brennstoffzellen-Stacks aufweisen. Dazu kann ein Kondensor in diesem Luftmassenstrom angeordnet sein und dieses kondensierte Wasser kann über eine fluiddurchgängige Leitung in den Wassertank geleitet werden.

Das wasserhydraulische Lager 110 kann als hydrodynamisches Lager 110 eingerichtet sein, das Wasser über den Kanal 115 im Lagerschild 130 selbst einzusaugen. Zur Abdichtung des Lagerspalts 114 weist die Achswelle 120 an ihrem Umfang Strukturen 122 auf, die mit der Lageranordnung zusammen eine Fliehkraftdichtung für den Lagerspalt 114 bilden. Dabei ist das wasserhydraulische Lager 110 in einer Lagerschale gebildet, die von dem Lagerschild 130 formschlüssig aufgenommen wird.

Zusätzlich weist die Lageranordnung 100 ein Kaltstartelement 200 auf, das eingerichtet ist, Wärme von der Statorwicklung 140 eines elektrischen Antriebsaggregats des Turbokompressors zu dem Lager 110 der Lageranordnung 100 zu leiten. Dazu ist ein erster Teil 230 des Kaltstartelements 200 benachbart zu der Statorwicklung 140 angeordnet, um Wärme von der Statorwicklung 140 aufzunehmen und ein zweiter Teil 220 des Kaltstartelements 200 benachbart zu zumindest einem Teil der Lageranordnung 100 angeordnet, um die aufgenommene Wärme an das Lager 110 der Lageranordnung 100 abzugeben. Dabei leitet der mittlere Teil 210 des Kaltstartelements 200 die Wärme vom ersten Teil 230 des Kaltstartelementes 200 zum zweiten Teil 220 des Kaltstartelements 200. Das Kaltstartelement 200 ist an einer Körperkante eines Lagerschildes 130 des Turbokompressors angeordnet, die der Statorwicklung 140 zugewandt ist. Dabei kann das Kaltstartelement 200 auch den gesamten Körperteil des Lagerschildes 130, der der Statorwicklung 140 zugewandt ist, beispielsweise in Form eines auf einen Teil des Lagerschildes 130 aufgebrachten Ringes, bilden. Dies ist in der Figur 1 nicht dargestellt. Das Material des Kaltstartelements 200 weist ein Material auf, das eine bessere Wärmeleitung hat als Stahl, wie zum Beispiel Aluminium oder Kupfer oder eine Legierung aus Aluminium und Kupfer. Das Kaltstartelement 200 kann als Stanz-Biegeteil geformt werden und an der Körperkante des Lagerschildes des Turbokompressors, die der Statorwicklung zugewandt ist, montiert sein.

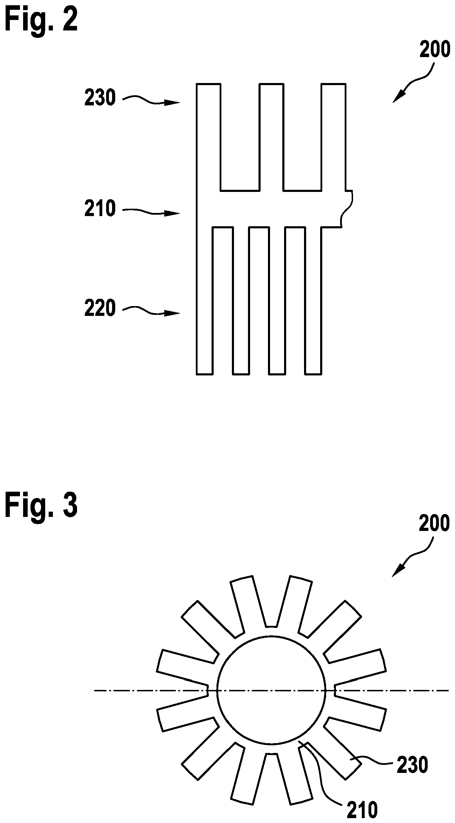

Die Figur 2 skizziert ein ausgeschnittenes Blechteil zum Bilden eines Stanz-Biegeteils zur Fertigung eines Kaltstartelements 200. Dabei weist dieses Blechteil einen mittleren Teil 210 auf, der zu einem Ring gebogen werden kann und bei dem sowohl für den ersten Teil 230 des Kaltstartelementes 200 als auch den zweiten Teil 220 des Kaltstartelements 200 Stege vorgesehen sind, die aus dem Blechteil beispielsweise ausgestanzt sein können.

Die Figur 3 skizziert das geformte Stanz-Biegeteil für ein Kaltstartelement 200 in dem die Stege 220 die den zweiten Teil des Kaltstartelements 200 bilden in die Tiefe der Abbildung der Figur 3 verformt wurden und der mittlere Teil 210 zu einem Ring geformt wurde, der auf die Körperkante des Lagerschildes 130 aufgebracht werden kann und bei dem die Stege des ersten Teils 230 des Kaltstartelements 280 radial von dem mittleren Teil 210 des Kaltstartelements 200 erstrecken.

## Patentansprüche

1. Verfahren zum Starten eines Turbokompressors mit einer Lageranordnung (100) für eine Achswelle (120) des Turbokompressors, wobei die Lageranordnung (100) zumindest ein wasserhydraulisches Lager (110) aufweist, das eingerichtet ist, die Achswelle (120) des Turbokompressors drehbar zu lagern, wobei das wasserhydraulische Lager (110) die Achswelle (120) an einem Umfang der Achswelle (120) umschließt, so dass ein Lagerspalt (114) gebildet wird, und wobei das wasserhydraulische Lager (110) eingerichtet ist, Wasser durch den Lagerspalt (114) fließen zu lassen, um die Achswelle (120) wasserhydraulisch zu lagern, und wobei die Lageranordnung ein Kaltstartelement (200) aufweist, das eingerichtet ist, Wärme von einer Statorwicklung (140) eines elektrischen Antriebsaggregats des Turbokompressors zu dem Lager (110) der Lageranordnung (100) zu leiten,
mit den Schritten:
elektrisches Ansteuern der Statorwicklung (140) des elektrischen Antriebsaggregats des Turbokompressors, zur Erwärmung der Statorwicklung (140), ohne dass die Achswelle (120) des Turbokompressors in Rotation versetzt wird;
elektrisches Ansteuern der Statorwicklung (140) des elektrischen Antriebsaggregats, um die Achswelle (120) des Turbokompressors in Rotation zu versetzen, sofern eine ausreichende Erwärmung des Lagers (110) gewährleistet ist.

2. Verfahren gemäß Anspruch 1, wobei die Statorwicklung (140) vorwiegend zur Erwärmung für eine vordefinierte Zeit elektrisch angesteuert wird, um eine ausreichende Erwärmung des Lagers (110) zu gewährleisten.

3. Verfahren gemäß Anspruch 1, wobei die Statorwicklung (140) vorwiegend zur Erwärmung elektrisch angesteuert wird, und mittels einer Temperatursensormessung gewährleistet wird, dass das Lager (110) ausreichend erwärmt ist.

4. Verfahren nach einem der vorhergehenden Ansprüche, wobei ein erster Teil (230) des Kaltstartelements (200) benachbart zu der Statorwicklung (140) angeordnet ist, um Wärme von der Statorwicklung (140) aufzunehmen und ein zweiter Teil (220) des Kaltstartelements (200) benachbart zu zumindest einem Teil der Lageranordnung (100) angeordnet ist, um die aufgenommene Wärme an das Lager (110) der Lageranordnung (100) abzugeben.

5. Verfahren gemäß einem der vorhergehenden Ansprüche, wobei das Kaltstartelement (200) an einer Körperkante eines Lagerschildes (130) des Turbokompressors angeordnet ist, und die Körperkante des Lagerschildes (130) der Statorwicklung (140) zugewandt ist.

6. Verfahren gemäß einem der vorhergehenden Ansprüche, wobei das Kaltstartelement (200) ein Material aufweist, das eine bessere Wärmeleitung aufweist als Stahl.

7. Verfahren gemäß einem der vorhergehenden Ansprüche, wobei das Kaltstartelement (200) Kupfer oder Aluminium oder eine Legierung aus Kupfer und Aluminium aufweist.

8. Verfahren gemäß einem der vorhergehenden Ansprüche, wobei das Kaltstartelement (200) als Stanz-Biegeteil aus einem Blech geformt wurde.

9. Verfahren gemäß einem der vorhergehenden Ansprüche, wobei das Kaltstartelement (200) den der Statorwicklung (140) zugewandten Teil des Lagerschildes (130) bildet.

10. Verfahren gemäß einem der vorhergehenden Ansprüche, wobei die Lageranordnung (100) einen Sensor aufweist, der zur Bestimmung der Lagertemperatur thermisch an das wasserhydraulische Lager (110) gekoppelt ist.

11. Verfahren gemäß einem der vorhergehenden Ansprüche, wobei das Lager (110) als hydrodynamisches Lager (110) ausgebildet ist.

## Claims

1. Method for starting a turbocompressor having a bearing arrangement (100) for an axle shaft (120) of the turbocompressor, wherein the bearing arrangement (100) has at least one water-hydraulic bearing (110), which is designed to rotatably mount the axle shaft (120) of the turbocompressor, wherein the water-hydraulic bearing (110) surrounds the axle shaft (120) over a circumference of the axle shaft (120), so that a bearing gap (114) is formed, and wherein the water-hydraulic bearing (110) is designed to allow water to flow through the bearing gap (114) in order to water-hydraulically mount the axle shaft (120), and wherein the bearing arrangement has a cold-starting element (200), which is designed to conduct heat from a stator winding (140) of an electric drive assembly of the turbocompressor to the bearing (110) of the bearing arrangement (100),
the method comprising the steps of:
electrically actuating the stator winding (140) of the electric drive assembly of the turbocompressor, for heating the stator winding (140) without causing the axle shaft (120) of the turbocompressor to rotate;
electrically actuating the stator winding (140) of the electric drive assembly in order to cause the axle shaft (120) of the turbocompressor to rotate, provided that sufficient heating of the bearing (110) is ensured.

2. Method according to Claim 1, wherein the stator winding (140) is electrically actuated predominantly for heating for a predefined time in order to ensure sufficient heating of the bearing (110).

3. Method according to Claim 1, wherein the stator winding (140) is electrically actuated predominantly for heating, and a temperature sensor measurement is used to ensure that the bearing (110) is sufficiently heated.

4. Method according to any of the preceding claims, wherein a first part (230) of the cold-starting element (200) is arranged adjacent to the stator winding (140) in order to absorb heat from the stator winding (140) and a second part (220) of the cold-starting element (200) is arranged adjacent to at least one part of the bearing arrangement (100) in order to give off the absorbed heat to the bearing (110) of the bearing arrangement (100).

5. Method according to any of the preceding claims, wherein the cold-starting element (200) is arranged on a body edge of a bearing plate (130) of the turbocompressor, and the body edge of the bearing plate (130) faces the stator winding (140).

6. Method according to any of the preceding claims, wherein the cold-starting element (200) comprises a material which exhibits better heat conduction than steel.

7. Method according to any of the preceding claims, wherein the cold-starting element (200) comprises copper or aluminium or an alloy of copper and aluminium.

8. Method according to any of the preceding claims, wherein the cold-starting element (200) was formed as a punched and bent part from a metal sheet.

9. Method according to any of the preceding claims, wherein the cold-starting element (200) forms the part of the bearing plate (130) that faces the stator winding (140).

10. Method according to any of the preceding claims, wherein the bearing arrangement (100) has a sensor, which is thermally coupled to the water-hydraulic bearing (110) for determining the bearing temperature.

11. Method according to any of the preceding claims, wherein the bearing (110) is in the form of a hydrodynamic bearing (110).

## Revendications

1. Procédé de démarrage d'un turbocompresseur avec un agencement de palier (100) pour un arbre d'axe (120) du turbocompresseur, l'agencement de palier (100) présentant au moins un palier hydraulique à eau (110) qui est conçu pour supporter en rotation l'arbre d'axe (120) du turbocompresseur, le palier hydraulique à eau (110) entourant l'arbre d'axe (120) sur une circonférence de l'arbre d'axe (120) de manière à former un interstice (114) de palier, et le palier hydraulique à eau (110) étant conçu pour laisser de l'eau s'écouler à travers l'interstice (114) de palier afin de supporter hydrauliquement l'arbre d'axe (120), et l'agencement de palier comportant un élément (200) de démarrage à froid qui est conçu pour conduire la chaleur depuis un enroulement formant stator (140) d'un groupe d'entraînement électrique du turbocompresseur vers le palier (110) de l'agencement de palier (100),
comprenant les étapes suivantes :
commander électriquement l'enroulement formant stator (140) du groupe d'entraînement électrique du turbocompresseur, pour chauffer l'enroulement formant stator (140), sans que l'arbre d'axe (120) du turbocompresseur soit mis en rotation ;
commander électriquement l'enroulement formant stator (140) du groupe d'entraînement électrique pour mettre en rotation l'arbre d'axe (120) du turbocompresseur, à condition qu'un échauffement suffisant du palier (110) soit garanti.

2. Procédé selon la revendication 1, dans lequel l'enroulement formant stator (140) est commandé électriquement principalement pour le chauffage pendant une durée prédéfinie afin de garantir un chauffage suffisant du palier (110).

3. Procédé selon la revendication 1, dans lequel l'enroulement formant stator (140) est commandé électriquement principalement pour le chauffage et dans lequel une mesure par capteur de température garantit que le palier (110) est suffisamment chauffé.

4. Procédé selon l'une des revendications précédentes, dans lequel une première partie (230) de l'élément (200) de démarrage à froid est agencée à proximité de l'enroulement formant stator (140) pour absorber la chaleur de l'enroulement formant stator (140) et une deuxième partie (220) de l'élément (200) de démarrage à froid est agencée à proximité d'au moins une partie de l'agencement de palier (100) pour transmettre la chaleur absorbée vers le palier (110) de l'agencement de palier (100).

5. Procédé selon l'une des revendications précédentes, dans lequel l'élément (200) de démarrage à froid est agencé sur un bord du corps d'un flasque (130) du turbocompresseur, et le bord du corps du flasque (130) est tourné vers l'enroulement formant stator (140).

6. Procédé selon l'une des revendications précédentes, dans lequel l'élément (200) de démarrage à froid présente un matériau qui présente une meilleure conduction thermique que l'acier.

7. Procédé selon l'une des revendications précédentes, dans lequel l'élément (200) de démarrage à froid présente du cuivre ou de l'aluminium ou un alliage de cuivre et d'aluminium.

8. Procédé selon l'une des revendications précédentes, dans lequel l'élément (200) de démarrage à froid a été formé à partir d'une tôle en tant que pièce découpée-cambrée.

9. Procédé selon l'une des revendications précédentes, dans lequel l'élément (200) de démarrage à froid forme la partie du flasque (130) tournée vers l'enroulement formant stator (140).

10. Procédé selon l'une des revendications précédentes, dans lequel l'agencement de palier (100) présente un capteur qui est relié thermiquement au palier hydraulique à eau (110) afin de déterminer la température du palier.

11. Procédé selon l'une des revendications précédentes, dans lequel le palier (110) est conçu sous la forme d'un palier hydrodynamique (110).
